(19) Europäisches Patentamt
European Patent Office
Office européen des brevets

(11) Publication number: **0 620 256 A2**

# (12) EUROPEAN PATENT APPLICATION

(21) Application number: **94104119.6**

(22) Date of filing: **16.03.94**

(51) Int. Cl.$^5$: **C09D 201/00**, C08L 33/02, B05D 7/14, //(C09D201/00, 171:02)

(30) Priority: **18.03.93 JP 58704/93**

(43) Date of publication of application: **19.10.94 Bulletin 94/42**

(84) Designated Contracting States: **DE FR GB**

(71) Applicant: **NIPPON PAINT COMPANY LIMITED**
**No. 2-1-2, Oyodokita,**
**Kita-ku**
**Osaka City, Osaka (JP)**

(72) Inventor: **Mizohata, Kouji**
**c/o Nippon Paint Co., Ltd.,**
**19-17, Ikedanaka-machi**
**Neyagawa, Osaka, 572 (JP)**
Inventor: **Saito, Koichi**
**c/o Nippon Paint Co., Ltd.,**
**19-17, Ikedanaka-machi**
**Neyagawa, Osaka, 572 (JP)**
Inventor: **Yagi, Tohru**
**c/o Nippon Paint Co., Ltd.,**
**19-17, Ikedanaka-machi**
**Neyagawa, Osaka, 572 (JP)**

(74) Representative: **TER MEER - MÜLLER - STEINMEISTER & PARTNER**
**Mauerkircherstrasse 45**
**D-81679 München (DE)**

## (54) Polymer composition for hydrophilic treatment.

(57) Disclosed herein is a polymer composition for hydrophilic treatment containing a polymer (a) such as a polyacrylic polymer, a polymer (b) such as polyethylene oxide or polyvinylpyrrolidone which can form a polymer complex by hydrogen bonding with the polymer (a), and a volatile base [II] such as ammonia for inhibiting formation of the polymer complex, as main components.

EP 0 620 256 A2

The present invention relates to a polymer composition for hydrophilic treatment which can be employed for hydrophilizating the surface of an aluminum member or an aluminum alloy member such as an aluminum fin member for a heat exchanger, for example, thereby inhibiting or preventing development of waterdrops, and a method of forming a hydrophilic polymer coating.

Description of the Background Art

It is known that moisture which is contained in the atmosphere condenses into waterdrops on a fin of a heat exchanger such as an air conditioner in cooling, to easily cause clogging with the waterdrops. Such clogging results in reduction in exchange efficiency of the heat exchanger caused by increase in ventilation resistance, generation of a noise, and contamination caused by splashing of the waterdrops. In order to prevent such problems, there have been proposed a number of methods for hydrophilizating the surface of a fin member of a heat exchanger and improving wettability.

For example, Japanese Patent Publication Nos. 53-48177 (1978) and 55-1347 (1980) and Japanese Patent Laying-Open Nos. 58-126989 (1983) and 59-13078 (1984) disclose methods of performing hydrophilic treatment with silicate such as water glass.

As to methods of hydrophilic treatment employing organic resin, Japanese Patent Laying-Open Nos. 3-26381 (1991) and 1-299877 (1989), for example, disclose methods employing polyvinyl alcohol in combination with specific water-soluble polymers and water-soluble cross linking agents. Further, Japanese Patent Laying-Open Nos. 2-107678 (1990) and 2-202967 (1990) disclose methods employing block copolymers consisting of hydrophilic polymer parts and hydrophobic polymer parts of specific hydrophilic monomers in combination with metal chelate cross linking agents. In addition, Japanese Patent Laying-Open Nos. 1-104667 (1989), 1-268747 (1989) and 1-270977 (1989) disclose methods employing polyacrylic amide resin.

However, an inorganic treatment agent having excellent hydrophilicity such as silicate which is proposed in some of the aforementioned gazettes has specific odor, while fine powder is scattered by decomposition of a coating. When this inorganic treatment agent is applied to the so-called precoat treatment of hydrophilizating an aluminum plate and thereafter working the same into a heat exchanger, further, a die is easily consumed in the working.

On the other hand, the organic resin treatment agent which is proposed in the remaining ones of the aforementioned gazettes is not much problematic as to odor and workability dissimilarly to the organic treatment agent, while the same is inferior in hydrophilicity. In particular, an air conditioner is increasingly miniaturized and reduced in weight in recent years with reduction in fin interval of a heat exchanger, and hence a treatment agent which can provide higher hydrophilicity is required. When polar groups contained in the molecular structure of the resin are increased in the organic resin treatment agent proposed in any of the aforementioned gazettes to improve hydrophilicity, the as-treated coating is easily dissolved in water due to reduction in water dissolution resistance, and it is impossible to maintain the hydrophilicity. When an antibacterial agent is blended in the treatment agent in order to prevent occurrence of mold or the like, the effect of such an antibacterial agent cannot be maintained due to water dissolution of the coating.

In recent years, a water-soluble treatment agent which can employ water as a solvent is desired in consideration of environment and safety. In such a water-soluble treatment agent, it is further difficult to attain compatibility between hydrophilicity of resin and water resistance of the coating after hardening, and none of generally proposed organic resin treatment agents can satisfy such requirement.

An object of the present invention is to provide a polymer composition for hydrophilic treatment which is excellent in hydrophilicity and water dissolution resistance with no problem of odor and that in precoat treatment, and a hydrophilic polymer coating prepared from the polymer composition.

The polymer composition for hydrophilic treatment according to the present invention contains [I] a combination of at least two polymers which are selected from the group consisting of polymers (a), (b) and (c), or the polymer (c) alone, and [II] a volatile base.

The polymer (a) is a polymer, having no capability of forming a polymer complex by hydrogen bonding by itself, which is prepared by polymerizing at least 50 mole percent of an unsaturated monomer having carboxylic groups. The polymer (a) is a water-soluble polymer or a polymer which becomes soluble in water by neutralizing with a base.

The polymer (b) is a water-soluble polymer which has no capability of forming a polymer complex by hydrogen bonding by itself but having protophilic structural units interacting with the carboxylic groups of the polymer (a) by hydrogen bonding power to be capable of forming a polymer complex by hydrogen bonding with the polymer (a).

The polymer (c) is a polymer, having capability of forming a polymer complex by hydrogen bonding by itself, which is prepared by polymerizing at least 50 mole percent of an unsaturated monomer having

carboxylic groups, and protophilic structural units interacting with carboxylic groups by hydrogen bonding power in its molecules. The polymer (c) becomes soluble in water by neutralizing with a base.

It is possible to prepare a water-insoluble polymer coating by applying an aqueous solution of this polymer composition onto a surface of a target such as an aluminum member or an aluminum alloy member and thereafter heating the polymer composition for evaporating moisture contained therein and vaporizing the volatile base contained in the polymer composition for forming a polymer complex, thereby forming a hydrophilic polymer coating on the surface of the target.

A method of forming a hydrophilic polymer coating according to the present invention comprises a step of applying an aqueous solution of the aforementioned polymer composition onto the target surface, and a step of heating the polymer composition which is applied onto the target surface, thereby volatilizing a volatile base contained in the polymer composition and forming the aforementioned polymer complex by hydrogen bonding for attaining water insolubility.

Further, a hydrophilic polymer according to the present invention is a polymer coating which is formed in the aforementioned manner, and contains a combination of at least two polymers which are selected from the group consisting of polymers (a), (b) and (c), or the polymer (c) alone. In more concrete terms, the aforementioned combination of at least two polymers indicates one of four types of combinations including that of the polymers (a) and (b), that of the polymers (a) and (c), that of the polymers (b) and (c), and that of the polymers (a), (b) and (c).

A method of preparing a polymer composition according to the first aspect of the present invention comprises the steps of: at least partially neutralizing carboxyl groups being contained in a polymer (a), having no capability of forming a polymer complex by hydrogen bonding by itself, being prepared by polymerizing at least 50 mole percent of an unsaturated monomer having carboxylic groups, with a volatile base [II]; and mixing a polymer (b), having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a), with said neutralized polymer (a).

A method of preparing a polymer composition according to the second aspect of the present invention comprises the steps of: neutralizing an unsaturated monomer having a carboxylic group with a volatile base [II]; preparing a polymer (a), having no capability of forming a polymer complex by hydrogen bonding by itself, by polymerizing said neutralized unsaturated monomer; and mixing a polymer (b), having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a), with said neutralized polymer (a).

A method of preparing a polymer composition according to the third aspect of the present invention comprises the steps of: neutralizing an unsaturated monomer having a carboxylic group with a volatile base [II]; preparing a polymer (c), having capability of forming a polymer complex by hydrogen bonding by itself, by copolymerizing at least 50 mole percent of said neutralized unsaturated monomer and a monomer having a protophilic structural unit interacting with a carboxylic group.

In the polymer complex which is formed by hydrogen bonding according to the present invention, the polymer having the carboxylic groups and that having the protophilic structures interact with each other by hydrogen bonding, to form a stable aggregate due to an entropy effect caused by the interacting functional groups which are adjacent to each other along the polymer chains. The interaction between the polymers is stronger than that between the molecules of the respective polymers and water molecules hydrated therewith in aqueous solutions. When an aqueous solution of the polymer having carboxylic groups is mixed with that of the polymer having protophilic structures, therefore, a complex of these polymers is immediately formed to cause precipitation. Such a polymer complex formed by hydrogen bonding is described in Journal of Polymer Science, Polymer Chemistry Edition, Vol. 13, pp. 1505 to 1514 (1975) or Survey Chemistry (Kagaku Sohsetsu), edited by the Chemical Society of Japan, No. 40, pp. 186 to 189 (1983), for example.

According to the present invention, the unsaturated monomer having carboxylic groups contained in the polymer (a) is not particularly restricted so far as the same has carboxylic groups, while the same can be prepared from a monomer having carboxylic groups and vinyl groups such as acrylic acid, methacrylic acid, itaconic acid or maleic acid. One, two or more such unsaturated monomers are employed so that at least 50 mole percent thereof is polymerized as a monomer component. If the amount of the unsaturated monomer having carboxylic groups is less than 50 mole percent, excellent hydrophilicity cannot be attained or the as-formed polymer complex is disadvantageously instabilized to reduce water dissolution resistance.

The polymer (a) in the present invention can be obtained by performing radical polymerization with at least 50 mole percent of the aforementioned unsaturated monomer. In such polymerization, an unsaturated monomer such as acrylic ester, methacrylic ester or styrene, for example, which is employed for general radical polymerization can be employed as another copolymerization monomer, in addition to the unsaturated monomer having carboxylic groups. Polymerization reaction can be made by a general method which is employed for forming a water polymer such as aqueous solution polymerization utilizing water as a medium, emulsion polymerization, or a method of polymerizing a solution by an organic solvent and thereafter replacing the solvent. The molecular weight of the polymer (a) is not restricted in particular, but this polymer preferably has average molecular weight of 1000 to 100000.

According to the present invention, the polymer (b) is not restricted in particular, so far as the same is repeatedly provided with protophilic structural units interacting with the carboxylic groups of the aforementioned polymer (a) by hydrogen bonding power along molecular chains to be capable of forming a polymer complex with the polymer (a). In more concrete terms, the polymer (b) can be prepared from that having polyoxyethylene chains $-(-CH_2CH_2-O-)_n-$ ($n \geqq 5$) having at least five repeating units, or that having at least five amide bonds in a single molecule on the average.

Examples of the polymer having polyoxyethylene chains are as follows:

(b-1) Polyethylene glycol expressed in the following general formula:

[1]

$$HO-(CH_2CH_2-O)_n-H \quad (n \geqq 5)$$

(b-2) A polyether compound having hydroxyl groups on its ends obtained by additionally polymerizing at least 5 moles of ethylene oxide per 1 mole of active hydrogen with a compound, such as methanol, ethanol, propanol, phenol, propylene glycol, dipropylene glycol, neopentyl glycol, hexylene glycol, butanediol, hexanediol, cyclohexanedimethanol, bisphenol A, polypropylene glycol, glycerin, trimethylolethane, trimethylolpropane, pentaerythritol, ethylamine, ethylene diamine or the like, having at least one active hydrogen functional group in its molecules. When the compound containing the active hydrogen functional group is prepared from glycerin, for example, this compound is expressed in the following general formula:

[2]

$$\begin{array}{l} CH_2-O-(CH_2CH_2-O)_l-H \\ | \\ CH-O-(CH_2CH_2-O)_m-H \\ | \\ CH_2-O-(CH_2CH_2-O)_n-H \end{array}$$

where $\ell$, m and n are identical to or different from each other, and $\geqq 5$.

(b-3) An ester compound prepared by reacting monobasic acid such as formic acid, acetic acid, propionic acid, butyric acid, glycolic acid, lactic acid or benzoic acid with parts of or all hydroxyl groups of the polyethylene glycol (b-1) or the polyether compound (b-2) containing terminal hydrogen. When the polyethylene glycol is employed, for example, this compound is expressed in the following general formula:

[3]

$$R^1O-(CH_2CH_2-O)_n-R^2$$

where $R^1$ represents a univalent organic carboxylic group R(C)-, and $R^2$ represents hydrogen or is equal to $R^1$. R represents a univalent organic residue, which is preferably alkyl or aryl, more preferably alkyl or aryl having a carbon number of 1 to 12.

(b-4) A vinyl polymer obtained by polymerization of an unsaturated monomer having polyoxyethylene chains, expressed in the following general formula:

[4]

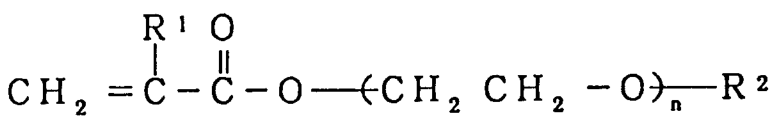

where $R^1$ represents hydrogen or a methyl group, $R^2$ represents hydrogen or a univalent organic residue, preferably represents hydrogen, alkyl or aryl, more preferably represents hydrogen, or alkyl or aryl having a carbon number of 1 to 6, and n ≧ 5, or by copolymerization with another unsaturated monomer such as styrene, acrylic acid or its ester, methacrylic acid or its ester or the like, which is copolymerizable with the same.

(b-5) A polyester polymer obtained by reacting polyethyele glycol having at least five repeating units with polybasic acid such as phthalic acid, isophthalic acid, terephthalic acid, tetrahydrophthalic acid, hexahydrophthalic acid, maleic acid, fumaric acid, adipic acid, succinic acid, sebacic acid, trimellitic acid or pyromellitic acid and its anhydride independently or with polyhydric alcohols such as ethylene glycol, propylene glycol, diethylene glycol, dipropylene glycol, neopentyl glycol, hexylene glycol, butanediol, hexanediol, cyclohexanedimethanol hydrogenated bisphenol A, glycerin, trimethylolethane, trimethylolpropane, pentaerythritol and the like at need.

(b-6) A polyurethane polymer obtained by reacting polyethylene glycol having at least five repeating units with isocyanate compounds such as tolylene diisocyanate, diphenylmethane diisocyanate, naphthylene diisocyanate, xylylene diisocyanate, hexamethylene diisocyanate, isophorone diisocyanate and dicyclohexylmethane diisocyanate and isocyanurate derivatives thereof independently or with polyhydric alcohols such as ethylene glycol, propylene glycol, diethylene glycol, dipropylene glycol, neopentyl glycol, hexylene glycol, butanediol, hexanediol, cyclohexanedimethanol, hydrogenated bisphenol A, glycerin, trimethylolethane, trimethylolpropane, pentaerythritol and the like at need.

In each of these polymers having polyoxyethylene chains, the polyoxyethylene chains may have repeating units in a number which is sufficient for attaining an entropy effect with respect to formation of the complex. The number of these repeating units is preferably at least 5, and more preferably at least 10. Further, the content of the polyoxyethylene chains is preferably at least 50 percent by weight of the overall polymer in consideration of hydrophilicity, and more preferably at least 70 percent.

Examples of the polymer having at least five amide bonds in a single molecule on the average, preferably having the amide bonds in side chains of the polymer, are as follows:

(b-7) An unsaturated amide monomer expressed in the following general formula:

[5]

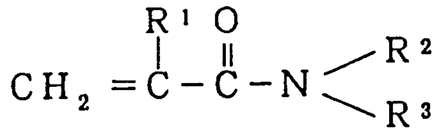

where $R^1$ represents hydrogen or a methyl group, and each of $R^2$ and $R^3$ independently represents hydrogen or an univalent organic residue, or both ends of an organic chain forming a ring structure, preferably independently represents hydrogen, alkyl, aryl, alkoxyalkyl or hydroxyalkyl, or both ends of an organic chain forming a ring structure consisting of carbon and hydrogen, or carbon, hydrogen and oxygen, more preferably independently represents hydrogen, alkyl having a carbon number of 1 to 6, aryl, alkoxyalkyl or hydroxyalkyl having a carbon number of 1 to 2, or both ends of an organic chain forming a five- to eight-membered ring structure consisting of carbon and hydrogen, or carbon, hydrogen and oxygen; and/or

a vinyl polymer obtained by; polymerization of an N-vinylamide monomer expressed in the following general formula:

[6]

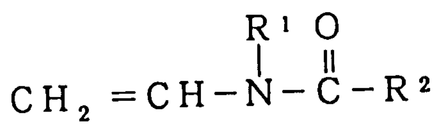

where each of $R^1$ and $R^2$ independently represents hydrogen or an univalent organic residue, or both ends of an organic chain forming a ring structure, preferably independently represents hydrogen, alkyl or aryl, or both ends of an organic chain forming a ring structure consisting of carbon and hydrogen, or carbon, hydrogen and oxygen, more preferably independently represents hydrogen, alkyl or aryl having a carbon number of 1 to 6, or both ends of an organic chain forming a five- to eight-membered ring structure consisting of carbon and hydrogen, or carbon, hydrogen and oxygen; or copolymerization with another unsaturated monomer such as styrene, acrylic acid or its ester, or methacrylic acid or its ester which is copolymerizable with the same.

Examples of the unsaturated amide monomer expressed in the above general formula (5) are acrylamide, methacrylamide, N-methylacrylamide, N-methylmethacrylamide, N,N-dimethylacrylamide, N,N-dimethylmethacrylamide, N-ethylacrylamide N-ethylmethacrylamide, N,N-diethylacrylamide, N,N-diethylmethacrylamide, N-isopropylacrylamide, diacetoneacrylamide, N-methylolacrylamide, N-methylolmethacrylamide, acryloylmorpholine and the like.

Examples of the N-vinylamide monomer expressed in the above general formula (6) are N-vinylformamide, N-vinyl N-methylformamide, N-vinylacetamide, N-vinyl N-methylacetamide, N-vinylpyrrolidone and the like. Further, N-vinylcarbamate compounds such as N-vinyloxazolidone and 5-methyl-N-vinyloxazolidone, and N-vinylimide compounds such as N-vinylsuccinimide and N-vinylphthalimide are also employable.

(b-8) A polymer of oxazoline obtained by making cationic ring opening polymerization of one or at least two oxazoline compounds each expressed in the following formula:

[7]

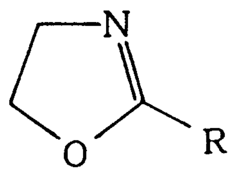

where R represents hydrogen or a univalent organic residue, preferably represents hydrogen, alkyl or aryl, more preferably represents hydrogen, or alkyl or aryl having a carbon number of 1 to 6.

Examples of the oxazoline compounds each expressed in the above general formula (7) are oxazoline, 2-methyloxazoline, 2-ethyloxazoline and the like.

When the unsaturated amide monomer and/or the N-vinylamide monomer is copolymerized with another unsaturated monomer, the content of the unsaturated amide monomer and/or the N-vinylamide monomer is preferably at least 50 mole percent, more preferably at least 70 mole percent, in consideration of hydrophilicity and stability of the complex. In particular, N-vinylpyrrolidone is preferably employed in consideration of stability.

When the hydrophilic structure of the polymer (b) is insufficient for attaining water solubility, anion functional groups such as those of carboxylic acid or sulfonic acid may be introduced into the molecules of the polymer (b) for neutralizing the same, in order to assist the hydrophilic structure. These anion functional groups are introduced in a range not damaging the function of the volatile base [II] for inhibiting formation of a complex with the polymer (a) or (c), formation of a complex after volatilization of the volatile base [II] in heating/drying and water dissolution resistance of the complex as formed. Specifically, the acid value is preferably in the range of 10 to 100.

According to the present invention, the molecular weight of the polymer (b) is not particularly restricted since the optimum value thereof is varied with its structure, while this polymer preferably has number average molecular weight of 500 to 500000.

According to the present invention, the polymer (c) having capability of forming a polymer complex by itself has both of the functions of the polymers (a) and (b), and is prepared by polymerizing at least 50 mole percent of an unsaturated monomer having carboxylic groups to have protophilic repeating units interacting with carboxylic groups by hydrogen bonding in its molecules. In more concrete terms, this polymer (c) is prepared from a vinyl polymer which is obtained by copolymerizing one or at least two monomers such as acrylic acid, methacrylic acid, itaconic acid and maleic acid having carboxylic groups and vinyl groups with an unsaturated monomer, such as the unsaturated monomer having polyoxyethylene chains expressed in the above formula (4), having repeating units capable of interacting with carboxylic groups by hydrogen bonding, for example. In such polymerization, another unsaturated monomer such as acrylic ester, methacrylic ester or styrene employed for ordinary radical polymerization may be copolymerized in addition to the unsaturated monomer having repeating units capable of interacting with the carboxylic groups of the unsaturated monomer having the carboxylic groups by hydrogen bonding.

The polymerization reaction can be made by aqueous solution polymerization with a medium of water, or an ordinary method which is employed for preparing an aqueous polymer such as a method of carrying out solvent replacement after solution polymerization with an organic solvent. However, it is preferable to employ a neutralized monomer which is prepared by previously reacting the volatile base [II] with an unsaturated monomer having carboxylic groups for polymerization, or to previously introduce the volatile base [II] into the polymerization reaction vessel and thereafter add the monomer for simultaneously progressing polymerization reaction and neutralization reaction, so that neither thickening nor gelation is caused during the polymerization by the interaction between the carboxylic groups and the repeating units capable of interacting with the same by hydrogen bonding.

The molecular weight of the polymer (c) is not restricted in particular, but this polymer preferably has number average molecular weight of 1000 to 100000.

In the present invention, the blending rates of the polymers (a), (b) and (c) depend on the rate of the functional groups for forming a complex. The polymers (a), (b) and (c) are preferably so blended that the content of the structural bodies of proton acceptors, contained in the polymers (b) and (c), interacting with carboxylic groups by hydrogen bonding power is 0.1 to 10 moles, preferably 0.3 to 3 moles, with respect to 1 mole of the carboxylic groups contained in the polymers (a) and (c). Examples of the proton acceptors

are the aforementioned oxyethylene structures and amide bonds.

According to the present invention, the volatile base [II] is not particularly restricted so far as the same can inhibit formation of a polymer complex by hydrogen bonding of the polymers (a) and (b) and has volatility. This volatile base [II] can be prepared from ammonia, or organic amine such as trimethylamine or triethylamine, for example, having a boiling point of not more than 150 °C, more preferably not more than 100 °C . One, two or more such volatile bases can be mixed into the inventive composition. Alternatively, the volatile base [II] may be prepared from a base such as tetramethylammonium hydroxide, for example, which is decomposed to low boiling point amine by heating. Further, the base may be partially replaced by a non-volatile base such as lithium hydroxide, sodium hydroxide or potassium hydroxide within a range not inhibiting formation of the polymer complex when the inventive polymer composition for hydrophilic treatment is hardened by heating/drying after application.

According to the present invention, the volatile base [II] causes neutralization reaction with the carboxylic groups contained in the polymers (a) and (c), thereby inhibiting formation of the aforementioned polymer complex.

A method of adding such a volatile base [II] is not restricted in particular unless the same is mixed with the polymer (c). The volatile base [II] can be blended with the polymers (a) and (b) in any of the following methods, for example:

(1) A method of previously blending the volatile base [II] with the polymer (a) to partially or entirely neutralize the carboxylic groups contained in the polymer (a) and thereafter adding the polymer (b).

(2) A method of preparing the polymer (a) by polymerizing a monomer which is prepared by previously reacting the volatile base [II] with carboxylic groups contained in an unsaturated monomer and thereafter adding the polymer (b) to the polymer (a).

(3) A method of reacting the polymers (a) and (b) with each other for forming a precipitate of the polymer complex, and thereafter adding a proper amount of the volatile base [II] thereto for attaining water solubility.

When the polymer (c) is employed, the volatile base is preferably neutrally reacted with an unsaturated monomer having carboxylic groups previously or simultaneously with polymerization reaction as hereinabove described, in consideration of stability of the polymerization reaction

In any case, the volatile base [II] may be added in an amount which is necessary for inhibiting formation of the polymer complex. The amount of such a volatile base [II], which depends on the structures of the polymers (a), (b) and (c), may be 5 to 10 percent of the total mole number of the carboxylic groups in general. When the amount of the volatile base [II] is too small, however, viscosity of the polymer composition may be too much increased even if formation of the polymer complex is inhibited. When the amount of the volatile base [II] is excessive, on the other hand, the polymer composition itself may cause a problem of odor or the like in heating/drying/hardening. Therefore, the amount of the volatile base [II] is more preferably at least 20 percent, particularly preferably 30 to 100 percent of the total mole number of the carboxylic groups.

According to the present invention, the polymer composition may contain a further component in addition to the aforementioned essential components of the polymers (a), (b) and (c) and the volatile base [II]. For example, the polymer composition may contain a cross linking agent which is known in relation to a water-borne paint, such as water-soluble melamine resin, urea resin, phenol resin, epoxy resin, or a metal cross linking agent. It is possible to provide the polymer composition with further excellent water dissolution resistance by introducing such a cross linking agent into the same. Alternatively, reactive functional groups may be introduced into any of the polymers (a), (b) and (c) to be self cross linking type polymer.

According to the present invention, further, the polymer composition may contain a general arbitrary component such as another water-soluble resin or water-dispersive resin, a pigment, a surface active agent, or an antifoaming agent, if necessary.

The inventive polymer composition for hydrophilic treatment can be applied onto a target surface such as a metal surface to be thereafter heated, thereby forming a hydrophilic and water insoluble polymer coating. An aqueous solution of the polymer composition can be applied by an ordinary method such as dipping, brushing, spraying or a roll coater method. Conditions for heating after the application may be so selected that water and the volatile base [II] are volatilized to allow formation of the polymer complex. In general, the heating is carried out under conditions of a temperature of about 100 to 300 °C and a time of about several seconds to tens of minutes.

According to the present invention, the polymer composition is applied onto the target surface as a water-soluble polymer composition while inhibiting formation of a polymer complex by the volatile base [II], and thereafter the volatile base [II] is volatilized with moisture contained in the composition to form the aforementioned polymer complex for providing a water-insoluble coating film.

The as-obtained coating film of the polymer complex is insoluble in water and excellent in water dissolution resistance with a number of hydrophilic groups contained therein to attain excellent hydrophilicity, since the same is prepared from a complex of the polymers.

Thus, it is possible to attain compatibility between hydrophilicity and water dissolution resistance of the coating, which has been hard to attain in a conventional organic resin treatment agent, thereby forming a polymer coating having excellent hydrophilicity and water dissolution resistance.

The foregoing and other objects, features, aspects and advantages of the present invention will become more apparent from the following detailed description of the present invention.

The present invention is now described in more detail with reference to Examples. In the following description, parts and percent indicate those by weight, unless otherwise stated.

[Preparation of Aqueous Solution of Polymer (a) (Previously Containing Volatile base [II])]

Preparation Example 1

6.6 parts of 25 % aqueous ammonia and 93.4 parts of ion exchange water were added to 100 parts of a 10 % aqueous solution of a commercially available homopolymer of polyacrylic acid (Jurymer AC-10L by Nihon Junyaku Co., Ltd.), to prepare an aqueous solution of polyacrylic acid which was partially neutralized with ammonia.

Preparation Example 2

A mixture of 32 parts of acrylic acid and 8 parts of acrylic 2-hydroxyethylester, and 20 parts of an ammonium persulfate solution were dropped from separate ports into 100 parts of ion exchange water under a nitrogen atmosphere at a temperature of 80 °C over 2 hours, and further heated/stirred over 3 hours to be polymerized with each other.

18.0 parts of triethylamine and 622.0 parts of ion exchange water were added to the as-obtained polymer, to prepare a partially neutralized aqueous solution of an acrylic acid copolymer.

Preparation Example 3

10.7 parts of methacrylic acid, 5.0 parts of methylmethacrylate, 4.3 parts of n-butyl acrylate, and 0.2 parts of dodecylmercaptan were added to 15.8 parts of a 0.3 % ion exchange aqueous solution of an anion type surface active agent (Newcol 271NH by Nippon Nyukazai Co., Ltd.) and stirred to prepare a monomer pre-emulsion.

This pre-emulsion and 8 parts of a 10 % persulfate ammonium solution were dropped from separate ports into 27.4 parts of ion exchange water under a nitrogen atmosphere at a temperature of 80 °C over 3 hours, and the mixture was heated/stirred for 1 hour for emulsion polymerization.

8.5 parts of 25 % aqueous ammonia and 320.1 parts of ion exchange water were added to the emulsion polymer to dissolve the emulsion, thereby preparing a neutralized aqueous solution of a methacrylic acid copolymer.

[Preparation of Aqueous Solution of Polymer (b)]

Preparation Example 4

5 parts of a commercially available high molecular weight polyethylene oxide (PEO-1 by Sumitomo Seika Chemicals Co., Ltd.) was dissolved in 95 parts of ion exchange water, to prepare a resin aqueous solution.

Preparation Example 5

40 parts of poly(ethylene oxide) methacrylate (MA100 by Nippon Nyukazai Co., Ltd.) having a repeating unit of 10, and 20 parts of a 10 % aqueous solution of ammonium persulfate were dropped from separate ports into 140 parts of ion exchange water under a nitrogen atmosphere at a temperature of 80 °C over two hours, and this mixture was further heated/stirred for 3 hours to attain aqueous solution polymerization. 600 parts of ion exchange water was added to the polymer, to adjust solid concentration.

Preparation Example 6

0.12 parts of dibutyl tin oxide was added to 30.6 parts of adipic acid, 28 parts of isophthalic acid, 10.8 parts of 5-sodium sulfoisophathalate, 21.8 parts of neopentyl glycol, 13 parts of ethylene glycol and 124.8 parts of polyethylene glycol (PEG-1000 by Sanyo Chemical Industries, Ltd.) having average molecular weight of 1000, and the mixture was heated to 150°C under a nitrogen atmosphere. The mixture was heated to 220°C over 4 hours with removal of as-formed water for progressing esterification, then decompressed to 1 mmHg over 1 hour, and thereafter its temperature was raised to 250°C over 3 hours, for preparing polyester resin containing 60 % of polyoxyethylene chains. 5 parts of this resin was dissolved in 95 parts of ion exchange water, to prepare a resin aqueous solution.

Preparation Example 7

5 parts of commercially available polyvinylpyrrolidone (Luviskol K-17 by BASF Japan Ltd.) was dissolved in 95 parts of ion exchange water, to prepare a resin solution.

Preparation Example 8

1 part of an azo initiator (V-601 by Wako Pure Chemical Industries, Ltd.) was dissolved in 30 parts of dimethylacrylamide and 20 parts of hydroxyethyl acrylate and this mixture was dropped into 49 parts of isopropanol under a nitrogen atmosphere at a temperature of 80°C over 2 hours, and further heated/stirred for 3 hours for attaining polymerization. 900 parts of ion exchange water was added to the polymer for diluting the same, thereby adjusting solid concentration.

Preparation Example 9

A mixture of 21 parts of N-vinylpyrrolidone, 4 parts of N-methylolacrylamide and 5 parts of poly-(ethylene oxide) methacrylate (MA50 by Nippon Nyukazai Co., Ltd.) and a solution prepared by dissolving 1 part of an azo initiator (ACVA by Otsuka Chemical Co., Ltd.) which was neutralized with 0.5 parts of dimethylethanolamine for attaining water solubility in 20 parts of ion exchange water were dropped from separate ports into 50 parts of ion exchange water under a nitrogen atmosphere at a temperature of 80°C over 3 hours, and further heated/stirred for 2 hours for polymerization. 50 parts of ion exchange water was added to the polymer for diluting the same, thereby adjusting solid concentration.

[Preparation of Aqueous Solution of Polymer (c) (Previously Containing Volatile base [II])]

Preparation Example 10

24 parts of acrylic acid was gradually added to a mixture of 22.7 parts of 25 % aqueous ammonia and 37.3 parts of ion exchange water to neutralize the same, thereby preparing an aqueous solution of acrylic ammonium salt. 16 parts of acrylic polyethylene oxide ester (Lightacrylate by Kyoeisha Chemical Co., Ltd.) containing ends of methoxy groups and having 8.4 repeating units on the average was added to this solution to prepare a monomer aqueous solution.

This monomer aqueous solution and 20 parts of a 10 % ammonium persulfate aqueous solution were dropped from separate ports into 80 parts of ion exchange water under a nitrogen atmosphere at a temperature of 80°C over 2 hours, and further heated/stirred over 3 hours to be polymerized with each other.

600 parts of ion exchange water was added to the polymer, to prepare a neutralized aqueous solution of an acrylic acid copolymer.

Aqueous solutions of the respective polymers which were prepared on the basis of the aforementioned Preparation Examples were blended with water-soluble cross linking agents of arbitrary components in ratios shown in Table 1 to prepare polymer compositions for hydrophilic treatment (Examples 1 to 13 and comparative examples 1 to 4), each of which was tested in the following procedure:

An aluminum plate (JIS A1100) of 50 mm by 100 mm by 0.1 mm was degreased with Surfcleaner 332N8 by Nippon Paint Co., Ltd. and subjected to phosphate/chromate treatment with Alsurf 407/47 by Nippon Paint Co., Ltd. The as-treated plate was cleaned with water and dried to be subjected to measurement of its weight W, thereafter dipped in each polymer composition solution for hydrophilic treatment for 1 minute, and heated at 180°C for 10 minutes to be dried and hardened. Weight Wi of this

test plate was measured and a water contact angle of the as-formed coating was measured with a full automatic contact angle measuring apparatus by Kyowa Kaimen Kagaku Co., Ltd. after 30 seconds upon contact with waterdrops, whereafter the plate was dipped in service water which was overflown at a flow rate of 1l/min. at the room temperature for 10 days. The plate was then air-dried indoors for one day and thereafter subjected to measurement of weight Wo and a water contact angle similarly to the above. An elution rate of the coating was calculated in the following formula:

Coating Elution Rate (%) = (Wi - Wo)/(Wi - W) x 100

Table 1 shows blending ratios of the respective polymer compositions for hydrophilic treatment and results of evaluation of the water contact angles and the coating elution rates. The blending ratios are shown in parts by weight of solid components.

Table 1

| | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 |
|---|---|---|---|---|---|---|---|---|---|---|---|---|---|---|---|---|---|---|---|
| Blending | ( a ) + ( II ) | Preparation Example 1 | 50 | 40 | — | — | 36 | 40 | 45 | 32 | — | — | 10 | — | 25 | 80 | — | — | — |
| | | Preparation Example 2 | — | — | 55 | — | — | — | — | — | 35 | — | — | — | — | — | — | — | — |
| | | Preparation Example 3 | — | — | — | 65 | — | — | — | — | — | — | — | — | — | — | — | — | — |
| | ( b ) | Preparation Example 4 | 50 | 40 | 45 | 35 | — | — | — | — | — | — | — | 20 | 25 | — | 80 | — | — |
| | | Preparation Example 5 | — | — | — | — | 54 | — | — | — | — | — | — | — | — | — | — | — | — |
| | | Preparation Example 6 | — | — | — | — | — | 60 | — | — | — | — | — | — | — | — | — | — | — |
| | | Preparation Example 7 | — | — | — | — | — | — | 45 | — | — | — | — | — | — | — | — | 90 | — |
| | | Preparation Example 8 | — | — | — | — | — | — | — | 48 | — | — | — | — | — | — | — | — | — |
| | | Preparation Example 9 | — | — | — | — | — | — | — | — | 65 | — | — | — | — | — | — | — | 100 |
| | ( c ) + ( II ) | Preparation Example10 | — | — | — | — | — | — | — | — | — | 100 | 80 | 80 | 50 | — | — | — | — |
| | Water-Soluble Cross Linking Agent | Water-Soluble Melamine Resin 1) | — | 20 | — | — | 10 | — | — | 20 | — | — | 10 | — | — | 20 | 20 | — | — |
| | | Urea Resin 2) | — | — | — | — | — | — | 10 | — | — | — | — | — | — | — | — | 10 | — |
| Test Result | | Water Contact Angle (Before Dipping) 3) | ◎ | ◎ | ◎ | ○ | ○ | ○ | ◎ | ◎ | ◎ | ◎ | ○ | ◎ | ◎ | △ | ◎ | ◎ | ◎ |
| | | Water Contact Angle (After Dipping) 3) | ○ | ◎ | ○ | ○ | ○ | ○ | ○ | ○ | ○ | ○ | ○ | ○ | ○ | × | ○ | ○ | ○ |
| | | Coating Elution Rate 4) | ○ | ◎ | ○ | ○ | ◎ | ○ | ○ | ◎ | ◎ | ○ | ◎ | ○ | ○ | ○ | × | △ | × |

1) Water-Soluble Melamine Resin: Sumimal M-50W (product by Sumitomo Chemical Co., Ltd.)

2) Urea Resin: (Cymel UFR-65 (product by Mitsui Toatsu Chemicals, Ltd.)

3) Contact Angle: ◎ = not more than 20°, O = 20° to 30°, ▲ = 30° to 40°, X = at least 40°

4) Coating Elution Rate: ◎ = not more than 10 %, O = 10 to 25 %, ▲ = 25 to 50 %, X = at least 50 %

It is clearly understood from Table 1 that the samples according to inventive Examples 1 to 13 exhibited small water contact angles after long-time dipping in flowing water, with small coating elution rates with respect to water. As to comparative examples, on the other hand, it is understood that the coatings were eluted in samples having high hydrophilicity while those having low film elution rates were inferior in hydrophilicity. According to the present invention, therefore, it is possible to attain both of hydrophilicity and water dissolution resistance.

Although the present invention has been described in detail, it is clearly understood that the same is by way of illustration and example only and is not to be taken by way of limitation, the spirit and scope of the present invention being limited only by the terms of the appended claims.

**Claims**

**1.** A polymer composition for hydrophilic treatment containing:

[I] a combination of at least two polymers being selected from the group consisting of polymers (a), (b) and (c), or independent said polymer (c); and

[II] a volatile base,

said polymer (a) being a polymer, having no capability of forming a polymer complex by hydrogen bonding by itself, being prepared by polymerizing at least 50 mole percent of an unsaturated monomer having carboxylic groups,

said polymer (b) being a water-soluble polymer having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a),

said polymer (c) being a polymer, having capability of forming a polymer complex by hydrogen bonding by itself, being prepared by polymerizing at least 50 mole percent of an unsaturated monomer having carboxylic groups, and having protophilic structural units interacting with carboxylic groups by hydrogen bonding power in its molecules.

**2.** A polymer composition for hydrophilic treatment in accordance with claim 1, wherein said protophilic structural units interacting with carboxylic groups are oxyethylene structures and/or amide bonds in said polymers (b) and (c).

**3.** A polymer composition for hydrophilic treatment in accordance with claim 2, wherein said polymers (a), (b) and (c) are so blended that said oxyethylene structures and/or said amide bonds in said polymers (b) and (c) are at a rate of 0.1 to 10 moles to 1 mole of said carboxylic acid groups in said polymers (a) and (c), said volatile base [II] being blended at a rate of 0.05 to 10 moles to 1 mole of said carboxylic acid groups in said polymers (a) and (c).

**4.** A polymer composition for hydrophilic treatment in accordance with claim 1, wherein said polymers (b) and (c) are polymers each containing polyoxyethylene chains having at least five repeating units, and/or polymers having at least five amide bonds in a single molecule on the average.

**5.** A polymer composition for hydrophilic treatment in accordance with claim 4, wherein each of said polymers having at least five amide bonds in a single molecule on the average is a polymer having a structure being prepared by polymerizing at least one compound selected from the group consisting of an N-vinylamide compound, an N-vinylimide compound, a (meth)acrylamide compound and a 2-oxazoline compound.

**6.** A polymer composition for hydrophilic treatment in accordance with claim 4, wherein each of said polymers having at least five repeating units is a polymer having at least 50 percent by weight of said polyoxyethylene chains to the overall polymer.

**7.** A polymer composition for hydrophilic treatment in accordance with claim 1, wherein said volatile base [II] is ammonia or organic amine having a boiling point of not more than 150 °C.

**8.** A polymer composition for hydrophilic treatment in accordance with claim 1, further containing a water-soluble cross linking agent [III].

**9.** A method of forming a hydrophilic polymer coating having water insolubility on a target surface for hydrophilizating said target surface, said method comprising the steps of:
applying an aqueous solution of a polymer composition in accordance with claim 1 onto said target surface; and
heating said polymer composition being applied onto said target surface, thereby volatilizing a volatile base being contained in said polymer composition and forming said polymer complex by hydrogen bonding for attaining water insolubility.

**10.** A hydrophilic polymer coating containing:
a combination of at least two polymers being selected from the group consisting of a polymer (a) being a polymer, having no capability of forming a polymer complex by hydrogen bonding by itself, being prepared by polymerising at least 50 mole percent of an unsaturated monomer having carboxylic groups; a polymer (b) being a water-soluble polymer having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a); and a polymer (c) being a polymer, having capability of forming a polymer complex by hydrogen bonding by itself, being prepared by polymerizing at least 50 mole percent of an unsaturated monomer having carboxylic groups, and having protophilic structural units interacting with carboxylic groups by hydrogen bonding power in its molecules; or
independent said polymer (c).

**11.** A method of preparing a polymer composition for hydrophilic treatment, comprising the steps of:
at least partially neutralizing carboxyl groups being contained in a polymer (a), having no capability of forming a polymer complex by hydrogen bonding by itself, being prepared by polymerizing at least 50 mole percent of an unsaturated monomer having carboxylic groups, with a volatile base [II]; and
mixing a polymer (b), having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a), with said neutralized polymer (a).

**12.** A method of preparing a polymer composition for hydrophilic treatment, comprising the steps of:
neutralizing an unsaturated monomer having a carboxylic group with a volatile base [II];
preparing a polymer (a), having no capability of forming a polymer complex by hydrogen bonding by itself, by polymerizing said neutralized unsaturated monomer; and
mixing a polymer (b), having no capability of forming a polymer complex by hydrogen bonding by itself but having protophilic structural units interacting with said carboxylic groups of said polymer (a) by hydrogen bonding power to be capable of forming a polymer complex by hydrogen bonding with said polymer (a), with said neutralized polymer (a).

**13.** A method of preparing a polymer composition for hydrophilic treatment, comprising the steps of:
neutralizing an unsaturated monomer having a carboxylic group with a volatile base [II];

preparing a polymer (c), having capability of forming a polymer complex by hydrogen bonding by itself, by copolymerizing at least 50 mole percent of said neutralized unsaturated monomer and a monomer having a protophilic structural unit interacting with a carboxylic group.